# EUROPÄISCHE PATENTSCHRIFT

(11) **EP 1 352 337 B1**
(45) Veröffentlichungstag und Bekanntmachung des Hinweises auf die Patenterteilung: **19.10.2005**
(21) Anmeldenummer: 02715387.3
(22) Anmeldetag: 03.01.2002
(51) Int. Cl.: G06F 17/16, G06F 1/00, G06F 17/60

(54) **MICRO-PAYMENT-SYSTEM FÜR INTERNET-SEITEN**
MICROPAYMENT SYSTEM FOR INTERNET PAGES
SYSTEME DE MICRO-PAIEMENT POUR PAGES INTERNET

(30) Priorität: 18.01.2001 DE 10117973
(43) Veröffentlichungstag der Anmeldung: 15.10.2003
(73) Patentinhaber: Bauersachs, Petra, 56299 Ochtendung (DE); Ciburski, Guido, 56299 Ochtendung (DE)
(72) Erfinder: Bauersachs, Petra, 56299 Ochtendung (DE); Ciburski, Guido, 56299 Ochtendung (DE)
(74) Vertreter: Aue, Hans-Peter
(86) Internationale Anmeldenummer: PCT/EP2002/000011
(87) Internationale Veröffentlichungsnummer: WO 2002/057950

(56) Entgegenhaltungen:
- EP-A- 0 843 449
- EP-A- 0 878 796
- WO-A-00/46653
- WO-A-98/44402
- US-A- 5 809 145
- US-A- 6 032 150
- JIAN Z: "The expressive task specification and adaptive image data handling for mobile applications" DISPLAYS, ELSEVIER SCIENCE PUBLISHERS BV., BARKING, GB, Bd. 17, Nr. 3-4, 1. Mai 1997 (1997-05-01), Seiten 217-231, XP004081507 ISSN: 0141-9382

## Beschreibung

Die Erfindung bezieht sich auf ein Abwicklungsverfahren zur Bezahlung oder Gutschrift von einzelnen Internet-Inhalten.

Bekannt sind Hardware basierte Lösungen mit Chipkarten, Chips oder Lesegeräten. Bekannt sind ebenfalls Lösungen, die auf der Anbieterseite die Installation spezieller Software und auf der Benutzerseite die Installation von Browser-Plug-Ins oder Spezialsoftware verlangen. Dies hat zum Nachteil, dass der Benutzer beispielsweise von unterwegs (z.B. aus einem Internetcafe) diese Dienste nicht benutzen kann, wie z.B. beim Click & Pay auf dem NET900-System (http://www.in-medias-res.com/net9.00.htm) .

Hierbei muss der Benutzer entweder T-Online-Kunde sein und/oder seine Internetverbindung beenden und eine neue Einwahl in das Intranet von T-Online vornehmen. Nach der Bezahlung muss er sich erneut ins "normale" Internet einwählen.

Der Zahlbetrag wird dann von der normalen Telefonrechnung abgebucht. Damit ist eine anonyme Abrechnung auf Benutzerseite nicht gewährleistet, da auch Dritte Zugang zur Telefonrechnung erhalten könnten.

Ebenso sind diverse Systeme bekannt, bei denen Inhalte des Anbieterservers nur gegen Preisgabe einer KreditkartenNummer freigegeben werden. Diese funktionieren meistens dadurch, dass dem Benutzer ein Passwort für geschützte Serververzeichnisse mitgeteilt wird.

Dabei tauchen auf Seiten des Inhalteanbieters folgende Probleme auf: Die Kundenbeziehungen zwischen Anbieter (Server) und Benutzer (Surfer) sind meist flüchtig, eine Vertrauensbeziehung gibt es oft nicht. Um den Kunden von der Werthaltigkeit der Informationen zu überzeugen, müssen diese meist bereits zu einem großen Teil offengelegt werden. Da der Anbieter manchmal nicht genau weiß, welcher Teil der Informationen für den Benutzer relevant ist, gibt er meist schon so viel preis, dass der Benutzer zur Bezahlung nicht mehr bereit ist. Auch wurden viele Zahlungssystem in Hinblick auf Warenkäufe und die Abrechnung größerer Beträge entworfen und eignen sich auf Grund ihrer Vielstufigkeit (Kreditkartensysteme mit Rückfragen bei VISA-Servern) und Sicherheitsrisiken nicht für die Abrechnung kleinster "Goodwill"-Beträge. Gerade diese Micro-Beträge sind aber eine elegante Möglichkeit, den Kunden an die Bezahlung von Internetinhalten heranzuführen, da er diese Beträge für sich als irrelevant einstuft. Die Summe dieser für den einzelnen Benutzer irrelevanten Beträge kann aber für einen Inhalteanbieter Existenz sichernd sein. Der Benutzer kann also genau den Teil der Information bezahlen, den er benötigt und muss keine größeren Zahlungen leisten, für Dinge die er nicht braucht. So kann er eine ganze Informationsbroschüre in codierter Form (die wichtigsten Daten sind codiert, der Rahmentext jedoch nicht) lesen und nur die Verweise und Links bezahlen, die er auch tatsächlich nutzt. Der Anbieter muss also nicht die gesamte Broschüre zum Verkauf stellen, sondern kann relevante Teile (einzelne Sätze, einzelne Daten, einzelne Links) kostenpflichtig decodierbar halten. Auf Seiten des Anbieters müssen keine komplexen Programmierungen erfolgen. Serverseitig müssen keine Spezialprogramme wie Perl etc. laufen, selbst ein einfacher Homepage-Betreiber kann dieses System nutzen.

Auf der Benutzerseite ergeben sich folgende Probleme: Solange er die Information nicht vorliegen hat, kann er die Werthaltigkeit nicht beurteilen. Liegt die Information vor, besteht keine Veranlassung zur Zahlung mehr. Dabei stellt sich immer die Frage, inwieweit man dem Informationsanbieter trauen kann. Ebenso wie man per Nachnahme einen Backstein anstatt einer Uhr erhalten kann, besteht auch im Internet erhöhte Betrugsgefahr. Hinter einem Link: "Bundesligaergebnisse" kann sich entweder die gesamte aktuelle Tabelle mit allen Ergebnissen verbergen oder nur ein kleiner Auszug oder eine veraltete Tabelle. Der Benutzer steht im Betrugsfall vor dem Problem, dass er bereits die "fehlerhafte" Ware bezahlt hat. Die bezahlte Internetseite muss also zu Nachweiszwecken kurze Zeit aufbewahrt werden, am besten durch den neutralen Dienstanbieter, der als Intermediär zwischen Benutzer und Inhalteanbieter fungiert.

Beide Seiten (Anbieter, Benutzer) müssen also vor gegenseitigen Betrugsversuchen und zudem vor Betrugsversuchen Dritter wirksam geschützt werden. Beispielsweise darf der Benutzer den Preis der Internetseite nicht manipulieren können, bzw. eine solche Manipulation muss mittels CHECKSUMMEN dem Diensteanbieter auffallen.

Daher müssen diverse Transaktionsmöglichkeiten definierbar sein, entweder sicher für den Anbieter (keine Reklamationsmöglichkeit für den Benutzer), oder sicher für den Benutzer (sofern Benutzer reklamiert, gibt es das Geld bzw. die Micropayment-Buchung zurück).

Der Benutzer möchte in der Regel im Internet anonym bleiben, für den gegenteiligen Fall stehen dem Inhalteanbieter genügend Möglichkeiten der Adressabfrage zur Verfügung. Trotzdem möchte der Inhalteanbieter seine bisherigen Kunden gezielt ansprechen können oder Statistiken darüber erstellen, welcher Kundentyp welche Art von Informationen kauft. Daher muss der Diensteanbieter den Kundenzugriff auf einer anonymisierten Ebene ermöglichen und sogar Emails vom Inhalteanbieter an den Kunden weiterleiten, jedoch mit dem Hinweis, dass der Inhalteanbieter die Adresse des Kunden nicht kennt, sondern sein Schreiben "quasi per Chiffre" verschickt hat.

Der Dienstanbieter wiederum möchte sein System auch Banken und Versicherungen anbieten können, um das System möglichst schnell zu verbreiten. Daher ist es nötig, dass Drittanbieter die direkte Kommunikation zum Benutzer und Anbieter übernehmen können und die eigentliche Abwicklung dennoch zentral möglich ist. Eine Provisionierung aller Beteiligten muss in alle Richtungen möglich sein. Ein Anbieter sollte also festlegen können, dass 10% der Einnahmen an einen anderen Anbieter gehen. Der Diensteanbieter sollte seine Provision von jeder Transaktion abziehen können und Unterprovisionierungen an Dritte anbieten können. Daher bietet sich eine zentrale Kundenverwaltung bei einem Diensteanbieter an. Der Benutzer muss sich dann nur noch bei einem Diensteanbieter anmelden. Der Inhalteanbieter muss seine Umstellung nur einmal vornehmen.

Aus der EP 0 878 796 A2 ist eine Informationsaufnahmevorrichtung zur Aufnahme von Informationen auf einem Aufnahmemedium, wie eine DVD, eine Informationswiedergabevorrichtung zur Wiedergabe von Informationen, die auf einem Aufnahmemedium aufgezeichnet sind, und ein Informationsverteilungssystem, dass eine Informationsaufnahme-Informationswiedergabevorrichtung zur Berechnung des Gebrauchs von den auf dem Aufnahmemedium aufgezeichneten Informationen oder den über ein Netzwerk verteilten Informationen bekannt. Die Informationsaufnahmevorrichtung umfasst eine Datentrennungssektion, eine lizenzinformationsregenerierende Sektion und eine Aufnahmesektion. Die Datentrennungssektion teilt zu verkaufende Informationen in zwei Teile, von denen der eine Teil von einem Benutzer ohne Decodierung der Lizenzinformation, also ohne Bezahlung einer Gebühr, gesehen werden kann. Beispielsweise wird ein Bild teilweise übertragen. Der zu verkaufende Teil der Information wird verschlüsselt und kann ohne die Lizenzinformation, beispielsweise ohne Zahlung einer Gebühr, nicht decodiert werden. der Benutzer erhält somit erst nach Entrichtung der Gebühr die komplette Information.

Die Informationswiedergabevorrichtung umfasst eine Informationsspeichersektion, eine Auslesesektion, eine Decodiereinheit und eine Wiedergabesektion. Die Informationsspeichersektion ist ein Speichermedium, wie eine DVD-ROM, eine DVD-RAM oder eine Festplatte. Alternativ dazu kann die in der Informationsspeichersektion gespeicherte Information von der Informationsspeichersektion über ein Netzwerk, wie das Internet übertragen werden. Die Auslesesektion liest eine Einheit von Informationen von der Informationsspeichersektion aus, überträgt die Lizenzinformation zu der Decodereinheit und überträgt den verschlüsselten und zu bezahlenden Inhalt an die Wiedergabesektion. Die Informationsaufnahmevorrichtung und die Informationswiedergabevorrichtung sowie sämtliche Rechnersektionen befinden sich in der Hand des Inhalteanbieters, der sämtliche Modalitäten beim Kauf der Inhalte mit den Benutzern direkt abwickelt.

Die EP 0 843 449 A2 offenbart eine durch Verschlüsselung gesichertes Computersystem mit einem Server, der mit Clients über ein öffentliches Netzwerk kommuniziert. Hierbei wird eine codierte Verschlüsselungstechnologie verwendet, die von einer ungerechtfertigten Weiterverteilung der Information, wie beispielsweise digitale Musikstücke, abhalten soll. Wenn ein Benutzer ein Musikstück ausgewählt hat, gibt eine Zahlungsinformation ein und erhält ein Passwort, das einmalig für den Benutzer und die Transaktion gilt. Die Passwortfunktionen, wie ein Entschlüsselungsschlüssel, erlauben den Gebrauch des Musikstückes durch Verwendung einer Zugangssoftware durch den Benutzer. Aus D2 ist auch die teilcodierte Präsentation von Musikstücken bekannt. Auch bei diesem Computersystem liegt die Verantwortung bei der Abwicklung des Verkaufs der Musikstücke bei dem Inhalteanbieter.

Aufgabe der Erfindung ist es, ein kostengünstiges und einfaches Abwicklungsverfahren zur Bezahlung von Internet-Inhalten für alle Beteiligten zu schaffen.

Erfindungsgemäß wird die Aufgabe dadurch gelöst, dass
- Inhalte wie Zahlen, Texte oder Links auf Bilder oder Texte dem Benutzer zunächst teilcodiert präsentiert werden, also lediglich die relevante und kostenpflichtige Nutzinformation der Seite unlesbar codiert ist, während der restliche Seitenaufbau und die übrigen Texte unverändert sind, dergestalt dass ein zentraler Diensteanbieter die uncodierten Seiten vom Inhalteanbieter entgegennimmt und anhand der innerhalb der Seite vom Inhalteanbieter definierten Abwicklungsmodalitäten beliebigen Benutzern teilcodiert präsentiert,
- die codierten Informationsteile dabei durch spezielle Zeichenketten vom Inhalteanbieter für den Diensteanbieter markiert werden und ein Link zum Diensteanbieter auf den kostenpflichtigen Seiten eingefügt wird,
- durch Anklicken dieses Links kann der Benutzer sich eine Gutschrift zubuchen lassen oder die Seite kaufen und damit eine uncodierte Seite vom Diensteanbieter erhalten, der die codierten Informationsteile anhand der Zusatzdaten innerhalb der Seite und/oder anhand der bei ihm gespeicherten Angaben zu Anbieter, Benutzer und Seite, decodiert.

Durch das vorgestellte System erfolgt eine einfache Umstellung vorhandener kostenfreier Internet-Sites auf das Angebot kostenpflichtiger Inhalte. Dabei soll es dem Benutzer erspart bleiben, sich bei jedem Anbieter einzeln anzumelden und Kontoverbindungen preiszugeben. Vielmehr wird er diesen Vorgang nur einmal durchführen und danach alle kostenpflichtigen Seiten anschauen können, ohne weiteren Aufwand betreiben zu müssen.

Der Vorgang des "Aufdeckens", also der Umwandlung von vormals nicht lesbaren Inhalten (codes) in lesbare Information gegen Bezahlung, wird möglichst rasch durch einen einzelnen Klick möglich. Der Informations-Anbieter wird dabei von einzelnen Zahlungstransaktionen, Kundenverwaltung und sonstigen Inkassoschritten entlastet.

Der Benutzer bleibt gegenüber dem Anbieter anonym, kann aber trotzdem (anonym) vom Anbieter angesprochen werden. Es wird auch der Verkauf von reinen Einzelinformationen innerhalb einer Internet-Seite möglich, also im Extremfall eine einzelne Zahl auf einer Internet-Seite.

Durch eine möglichst geringe Mindestransaktionsgröße wird der Widerstand der Benutzer gegen Bezahlung von Informationen im Internet gemildert.

Zur schnelleren Marktpenetration kann das Verfahren ohne jede Hardware auskommen, wie Chips, Smartcards; Chipkartenleser usw..

Der Internet-Surfer kann leicht zum Teilnehmer des Transaktionsdienstes werden, d.h., er kann sich also "on the fly" anmelden können, wenn er das erste Mal auf eine kostenpflichtige Seite codiert nach diesem System stößt. Dabei wird auf einen tatsächlichen Identitätsnachweis verzichtet. Es genügt, dass das Transaktionskonto in gewissen Rahmen ausgeglichen ist.

Der Seitenanbieter wird nicht zur zusätzlichen Verwaltung codierter Werte gezwungen, etwa durch Einfügen zusätzlicher Spalten in seinen Datenbanken. Er muss auch keine codierten Seiten verwalten, Codierungs-Software installieren oder sonstige Performance-Bremsen installieren. Vorhandene Seitengestaltungs-Software und Datenbank-Programme können weiter benutzt werden.

Der Informationsanbieter hat außer dem automatisierbaren Einfügen gewisser Schlüsseltexte in die Meta-Tags seiner Seiten und eines "Bezahl"-Links keinen größeren Editionsaufwand. Die Seitengestaltung einer kostenlosen und einer kostenpflichtigen Seite unterscheidet sich für den Benutzer nicht, mit der Ausnahme, dass die kostenpflichtigen Teile codiert dargestellt sind.

Der Aufwand für den Benutzer um an die uncodierten Informationen heranzukommen beschränkt sich auf einen einzigen Klick, auf Wunsch noch auf weitere Bestätigungsklicks.

Die Höhe seiner Transaktionssicherheit ist für Anbieter und Benutzer einstellbar und für die jeweilige Gegenseite transparent. Das System ist gegen das Aushorchen von Passwörtern und das Manipulieren von Seiten weitestgehend geschützt. Es wird seitens der Server des Informationsanbieters kein erhöhter Datenverkehr erzeugt (sowohl Volumen als auch Zugriffshäufigkeit).

Es wird eine Lösung erzielt, die von verschiedenen Dienstanbietern gleichzeitig benutzbar ist (Monopol-Vermeidung), die aber insoweit standardisierbar ist, als das nach immer gleichen Gestaltungsregeln verfahrbar ist (Normierbarkeit) und daher sowohl Anbieter, als auch Benutzer sich den Dienstanbieter ihres Vertrauens beliebig aussuchen können.

Das System ermöglicht die Authentifizierung des Benutzers gegenüber dem Diensteanbieter nur durch Passwort und Benutzername.

Die zeitgebundene Bezahlung (Abrechnung z.B. nach Minuten, in denen man sich einen Videofilm anschaut) wird ebenfalls mit dem gleichen System erreichbar.

Die Abfragestatistiken des Anbieters verändern sich durch das System nicht, da ansonsten z.B. bei Verlagen die Teilnahme an normierten Zählverfahren erlischt.

Die bisherige Kommunikation zwischen Inhalteanbieter und Benutzer (Internet-Surfer) erfolgte bislang über statische Internetseiten, die auf dem Server oder Host des Anbieters liegen oder dynamisch aus einer Datenbankanfrage heraus erzeugt werden. Diese Seiten hat der Server des Inhalteanbieters an den Rechner des Benutzers gesendet.

Für beide Verfahren sind Abwicklungs-Regeln im vorgestellten System definiert. Beide Verfahren verwenden die folgenden gemeinsamen Regeln:
1. Informationen (Links auf andere Seiten; Links auf Bilder; Texte; Zahlen), für die der Benutzer zahlen soll, müssen durch den Anbieter im HTML-Quelltext mit speziellen Zeichenketten umgeben werden, z.B. $$_ vor der Information und _$$ nach der Information.
2. Alle Abwicklungsparameter wie Authentifizierung des Anbieters (Host-ID; Passwort) oder Preis der Seite (Währung z.B. Microdollar) oder Reklamationsfrist etc. werden in Form von Meta-Tags nach einem vom Dienstanbieter definiertem Schema in jeder kostenpflichtigen Seite hinterlegt.
3. Auf kostenpflichtigen Seiten wird durch den InhalteAnbieter ein Link auf den Diensteanbieter gelegt. Durch Anklicken dieses Links kann der Benutzer zahlen und die Information einsehen.
   Solcherart erzeugte Internet-Seiten sind für den Benutzer noch uncodiert. Sie sind lediglich für eine Verarbeitung durch den Diensteanbieter vorbereitet. Die eigentliche Nutzinformation ist ungeschützt einsehbar.
   Weitere Regeln:
4. Diese Seiten werden nie an den Benutzer gesendet, sondern per SHTML an eine spezielle Adresse des Diensteanbieters. Die Abfragestatistiken des Anbieters verändern sich also nicht. Auch die Server-Performance verändert sich (mit Ausnahme etwas größerer Textvolumen durch den Seitenheader) nicht. Weitere Server-Aktionen erfolgen durch den Anbieter nicht.
5. Die Codierung der "vorbereiteten" Seiten erfolgt ausschließlich durch den Diensteanbieter. Dieser gibt die Seite sofort - codiert - an den Benutzer weiter, oder im Falle statischer Seiten auf den Server des Inhalteanbieters. Es werden diverse Sicherheitsparameter eingefügt und Abwicklungsparameter des Inhalteanbieters gelöscht, codiert oder unverändert gelassen. Die gesamte Internet-Seite ist durch eine CHECKSUMME gegen Manipulationen geschützt.
6. Der Benutzer (Surfer) erhält also nur die Sicht auf eine codierte Seite. Beispiel: Statt dem Text "Die für Sie günstigste Versicherung ist die Debeka, Sie sparen DM 1000", liest er "Die für Sie günstigste Versicherung ist die $$_i9opü6_$$, Sie sparen DM $$_u8i9_$$". Die codierte Information ist aus Gründen der Seitengestaltung immer genauso lang wie der uncodierte String. Wer dies vermeiden möchte (eine zweistellige Automarke kann nur VW sein), muss Leerzeichen ausgeben und dann den Codierungs-Endestring einfügen. Auf dieser Seite kann er also erkennen, welche Informationen er erhalten kann. Er findet auf dieser Seite zudem einen Link zur "Aufdeckung" der verdeckten Daten. Er kann nun diese Information kaufen, muss es aber nicht.
   Kauf von Informationen, Decodieren codierter Internetseiten:
7. Der Link auf der Seite führt zum Decodierungsserver des Diensteanbieters. Im Link ist aus Gründen der Transparenz nochmals der Preis der Seite aufgeführt und weitere wichtige Parameter zum Kundenschutz. Durch Klicken des Links wird die Verbindung zum Decodierungsserver hergestellt. Dieser erhält den Seiteninhalt und kann die Seite wie folgt decodieren.

### Decodierungsschritte, Sicherheitchecks:

a) Zunächst liest der Decodier-Server die Checksumme, die auf der Seite vermerkt ist und erzeugt eine neue Checksumme aus dem HTML-Quellcode. Stimmen beide überein, ist die Seite unmanipuliert, stammt also vom Decodier-Server.
b) Durch einheitliches Decodieren der Checksumme erhält der Server die Nummer des benutzten Verschlüsselungsverfahrens. Mit Hilfe dieses Verschlüsselungsverfahrens übersetzt er alle verschlüsselten Werte (das sind die innerhalb von $$_ und _$$) in unverschlüsselte. Aus der Checksumme generiert er zudem HOST-ID und Preis und weitere Abwicklungs-Parameter der Seite. Diese vergleicht er zur Sicherheit mit den Parametern im Meta-Tag. Wenn alles übereinstimmt, kann die Seite an den Benutzer "verkauft" werden.
c) Zur Authentifizierung liest der Decodierungsserver die Cookies auf dem Senderechner, als dem Rechner des Benutzers, der die zu decodierende Seite gesendet hat. Findet er ein Cookie kann er das codierte Passwort und den codierten Username herauslesen. Andernfalls muss es Usernamen und Passwort erfragen und dann ein neues Cookie erzeugen, sofern erlaubt und erwünscht. Bei Neukunden ist zunächst eine Anmelderoutine (s.u.) zu durchlaufen. Nach Authentifizierung vergleicht der Decodier-Server das Kundenkonto mit den Anforderungen des Inhalteanbieters. Dieser kann es z.B. ablehnen, dass Informationen durch ungedeckte Konten bezahlt werden oder bewusst das Risiko eingehen, dass eine Einzahlung nie erfolgt. Der Kunde wiederum kann sich eine Transaktion nur gegen Rückfrage vorbehalten oder (mittels Cookie) das automatische Bezahlen ohne Rückfrage bis zu einem bestimmten Betrag erlauben.
d) Der Seitenkauf erfolgt also im Extremfall ohne Zutun des Benutzers, sofort nach dem Klick. Er erhält vom Decodierungs-Server die Originalseite. Der Decodierungsserver speichert die Seite zu Nachforschungszwecken (im Falle einer Reklamation) eine gewisse Zeit und auch sonstige Einzelheiten der Transaktion. Er bucht den Seitenpreis vom Kundenkonto ab und weist sich und dem Anbieter, oder Drittanbietern (je nach den Abwicklungsparametern in den Seiten-Meta-Tags) entsprechende Provision zu.
e) Der Anbieter erhält sein Geld mit einer gewissen Verzögerung, damit Reklamationen von Benutzerseite abgewartet werden können. Anbieter kann auch ein "normaler" Benutzer sein, der entsprechende Zahlungslinks auf seiner Homepage hat. Damit kann ein Benutzer A einem Benutzer B Geld überweisen. Den Zahlungseingang kann der Anbieter durch Passwort geschützten Einblick in sein Konto beim Dienstanbieter erfragen. Umgekehrt hat der Benutzer jederzeitigen Einblick, wo sein Geld geblieben ist und kann sich die Seiten sogar einzeln ansehen.
f) durch Definition negativer Seiten-Kosten kann der Benutzer vom Anbieter auch Vergütungen erhalten, quasi als Belohnung dafür, dass er sich eine Folge von Werbeseiten angesehen hat.

### Anmelderoutine zum Service:

Die Anmelderoutine ist größtenteils anonym. Notwendig ist eine valide Emailadresse, um Kontakt zum Benutzer aufnehmen zu können. An diese wird das Passwort zur Benutzung gesendet. Danach erhält der Benutzer entweder Kredit oder muss einer Einzugsermächtigung zustimmen oder Geld auf ein definiertes Konto des Diensteanbieters überweisen oder sich bei Vergütungsdiensten (siehe oben unter f) entsprechende Guthaben erarbeiten. Die Währung ist weltweit einheitlich Microdollar, also ein 1000stel Dollar.

Alle weiteren Einzelheiten sind Teil der Gestaltung der allgemeinen Geschäfstbedingungen zwischen Anbieter und Benutzer, Anbieter und Dienstanbieter und Benutzer und Dienstanbieter. Offen und erweiterungsfähig ist das Verfahren durch die Definition neuer Meta-Tags und die Definition eines neuen Dialogs zum Benutzer im Moment der Zahlungsbestätigung.

Beispielsweise können Veröffentlichungstermine einer Seite durch einen speziellen Meta-TAG bestimmt werden.

Dann decodiert der Dienst diese Seite erst nach Ablauf der Frist. Oder eine Seite kann ab einen gewissen Zeitpunkt nicht mehr decodiert werden usw..

Der der Erfindung zu Grunde liegende Gedanke wird in der nachfolgenden Beschreibung anhand von Ausführungsbeispielen näher beschrieben.

Ein Server des Inhalteanbieters enthält zunächst normale Internet (HTML)-Seiten, die für das vorgestellte Zahlungssystem vorbereitet werden sollen. Der Inhalteanbieter meldet sich zunächst beim Dienstanbieter an und erhält eine HOST-ID und ein Passwort, mit dem er sich gegenüber dem Diensteanbieter identifiziert und ein Passwort, welches in seinen eingereichten Internetseiten stehen muss.

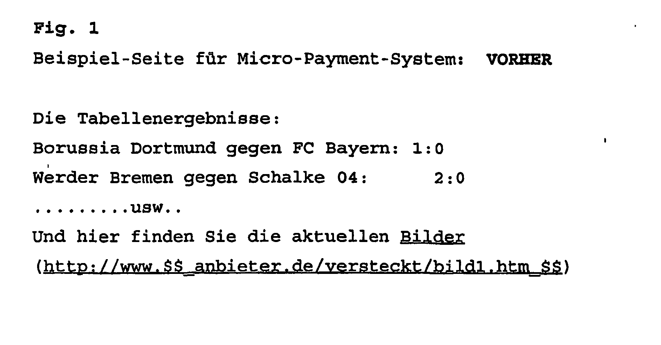

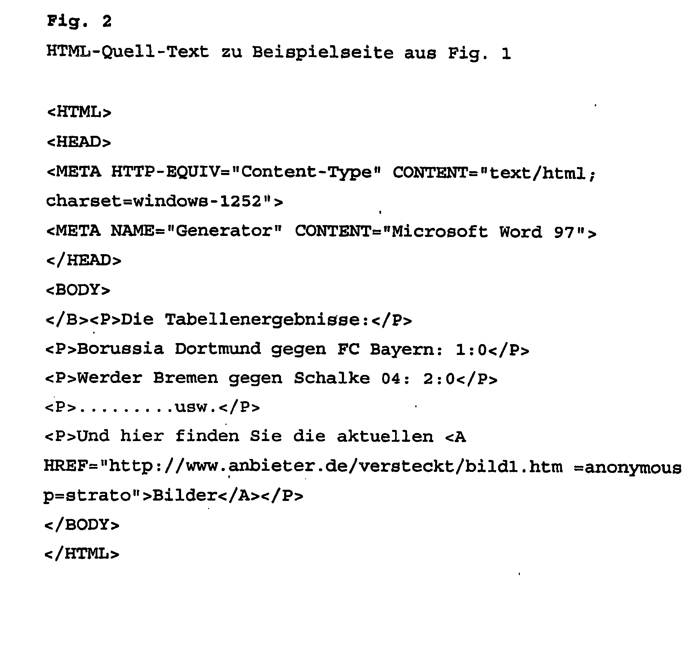

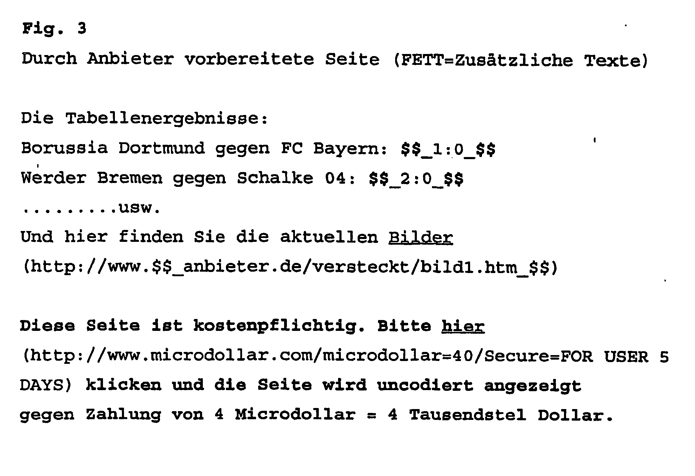

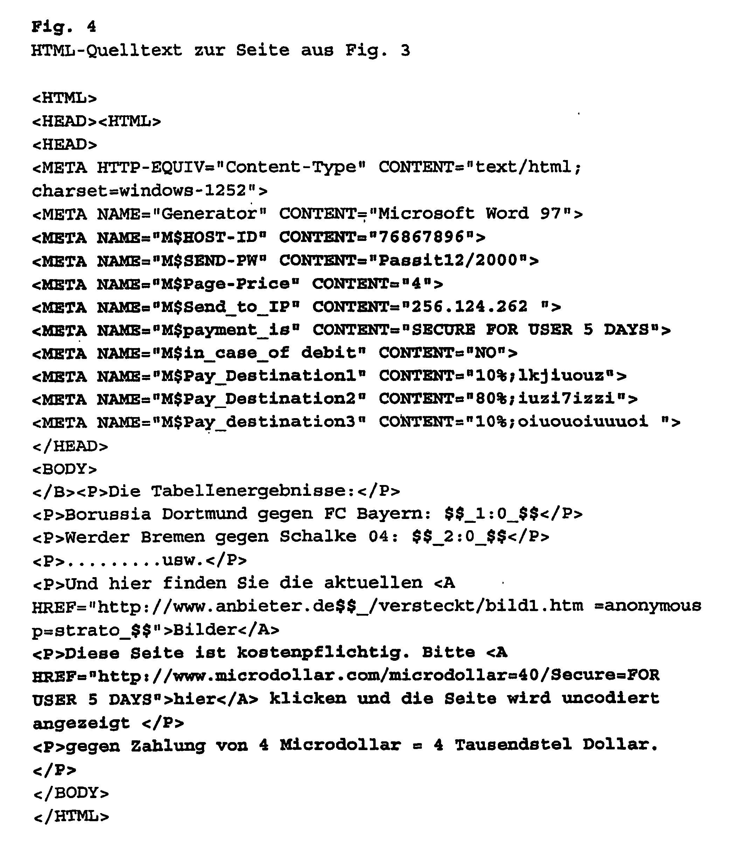

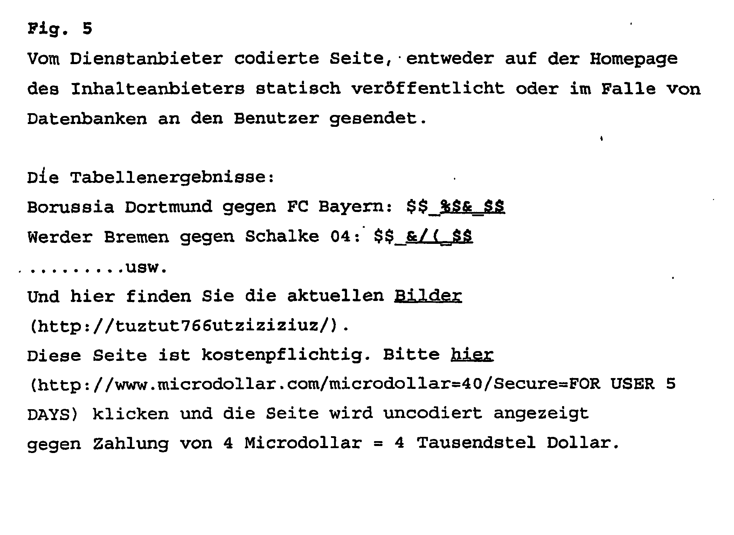

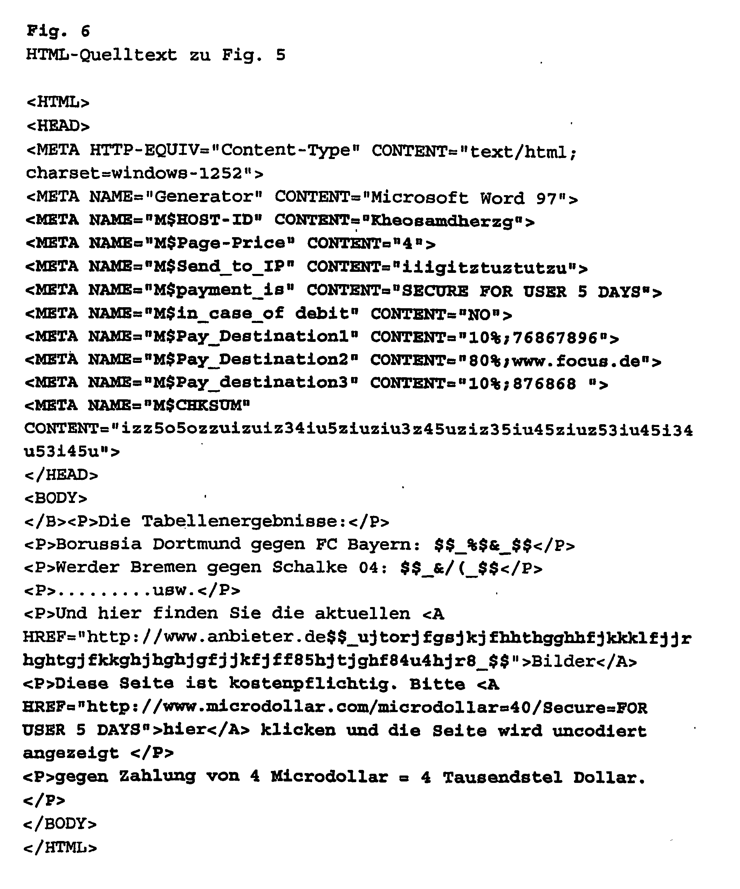

Ein Beispiel für eine "normale" Seite und deren HTML-Quelltext zeigt Fig. 1. Diese Seite muss zunächst für die Codierung vorbereitet werden. Dazu werden mindestens drei Zeilen im Bereich der Meta-TAGS im Header-Bereich einer HTML-Seite eingefügt (HOST-ID, Sende-Passwort des Hosts und Empfänger-IP-Adresse). Alle anderen Werte haben einen Default und müssen nur bei Abweichung vom Default angegeben werden. Dieser einzufügende Bereich ist bei statischen Seiten unabhängig vom Seiteninhalt, bei Datenbank-Ergebnissen liegt die Empfänger-IP ohnehin vor. Dadurch erfordert das Einfügen dieser Zeichenketten in die Seite nur geringe administrative oder programmtechnische Zusatzvorkehrungen. Die Meta-TAGS werden zudem nicht auf der HTML-Seite angezeigt. Die Informationen, die verkauft und daher vom Diensteanbieter codiert werden sollen, müssen durch spezielle Start- und Endestrings gekennzeichnet werden. Alle Zeichen, die zwischen solchen Strings liegen, werden später codiert.

Diese vorbereitete Seite wird nun zum Diensteanbieter gesendet, anstatt zum Benutzer (im Falle von dynamischen Seiten) oder anstatt auf den Veröffentlichungsserver (im Falle statischer Seiten).

Der Dienstanbieter verschlüsselt nun die Seiten, nach einem nur ihm bekannten Verfahren. Die möglichen Verfahren sind dabei sehr unterschiedlich. Bestimmte Meta-Tags werden verschlüsselt, einige entfernt, einige bleiben unverändert. Die zu verkaufenden Informationen (Texte, Links auf Bilder oder Seiten etc.) werden ebenfalls codiert. Welches Verfahren der Diensteanbieter benutzt hat, speichert er in einem neuen CHECKSUMMEN-Meta-TAG sowie eine Quersumme aus dem gesamten HTML-Inhalt der Seite, damit man Manipulationen mit gewisser Sicherheit feststellen kann. Ebenso werden einige Zusatzparameter, wie der Seitenpreis etc. ebenfalls in die Checksumme eingebaut, damit man später Manipulationen feststellen kann.

Solchermaßen codierte Seiten sendet der Diensteanbieter nun (im dynamischen Fall) an den Benutzer oder (im statischen Fall) an den Veröffentlichungsserver.

Wenn ein Benutzer diese Seite kaufen will, klickt er einen "Reveal"-Link und der Dienstanbieter erhält die Seite zurückgeschickt. Nachdem er die Seite dekodiert hat und der Benutzer die geforderte Zahlung bestätigt hat, erhält der Benutzer die uncodierte Seite zugeschickt. Dabei ist es für den Inhalteanbieter von Vorteil, dass auch Drittanbieter bereits codierte Seiten anbieten können und dabei an einem Provisionierungssystem teilhaben können. Dies ermöglicht ein Spezialtag <META NAME="M$Pay_3rdParty" CONTENT="10%">. Dann werden 10% des Seitenerlöses dem Server zugewiesen, auf dem ein Benutzer die codierte Seite gefunden hat, sofern dieser Server sich bereits in das System eingetragen hat. Wichtig ist, dass auf diese Weise die Urheberrechte des Inhalteanbieters gewahrt bleiben, da der Drittanbieter kein Interesse daran hat, die Seiten zu manipulieren, um etwa die Herkunft der Inhalte zu verschleiern.

In diesem Fall würden die Seiten nie mehr decodiert werden, da die Checksummen defekt wären. Durch diesen Spezialtag können also codierte Seiten (z.B. Urteile) von einem Verlag kopiert werden und auf einem eigenen Server (z.B. von einem Rechtsanwalt) beibehalten werden. Der Verlag profitiert in dem von ihm definierten Maß und beteiligt den Rechtsanwalt bei jedem Seitenabruf bzw. Kauf einer Seite.

Durch spezielle Tags könnten auch Seiten von einer Weiterverbreitung ausgeschlossen werden, indem der Inhalteanbieter darüber informiert wird, wenn seine codierte Seiten auf anderen Servern gefunden wurden. Hierüber erhält der Dienstanbieter ja bei jedem Kauf durch einen Benutzer Kenntnis.

In einem anderen Ausgestaltungs-Beispiel sollen dem Benutzer Gutschriften z.B. für das Rezipieren von Werbeseiten zugebucht werden. Grundsätzlich erfolgt dies durch negative Seiten-Preise. Während bei einem Kauf ein Missbrauch durch Kopieren oder Mehrfachkauf auszuschließen ist (da ja jedes Mal bezahlt werden muss), ist die Interessenlage bei einer Gutschrift anders. Es muss also vermieden werden, dass eine Gutschrift doppelt erfolgt, oder eine codierte Seite an beliebige Empfänger wahllos verteilt wird.

Dabei ist durchaus eine Marketingaktion denkbar, bei der ein gewisser Text an 1000 Empfänger gesendet wird und jeder Empfänger eine Gutschrift erhält, wenn und nachdem er diesen Text liest. Dann muss allerdings auch sichergestellt sein, dass der Text gelesen wurde und keine maschinelle Bereicherung dahintersteckt.
Die vom Inhaltanbieter gewünschten Abwicklungsmodalitäten werden wieder über Meta-Tags definiert. Z.B. ein Verfallsdatum, ab dem es keine Gutschriften mehr für diese Seite gibt. Oder dass pro Benutzer diese Seite nur einmal "bezahlt" wird. Oder dass diese Seite maximal 1000 mal bezahlt werden darf (also an die ersten 1000 Abrufer). Oder dass diese Seite nur bezahlt wird, nachdem der Benutzer ein gewisses Codewort im Zahlungsdialog eingibt, welches sich erst aus dem Text ergibt (dann kann man sicher sein, dass er wirklich den Text gelesen hat).

In einem weiteren Ausgestaltungsbeispiel sollen zeitabhängige Gebühren für einen Videofilm oder eine Audiodatei abgebucht werden. Dies kann unter Verwendung des gleichen Systems dadurch erfolgen, dass entweder vorab Zeit gekauft wird oder nach einiger Zeit eine Seite gekauft werden muss, damit der Film fortgesetzt wird. Es können dabei verschiedene Zeitdauern angeboten werden, auf einzelnen Unterseiten mit jeweils unterschiedlichen Preisen.

## Patentansprüche

1. Abwicklungsverfahren zur Bezahlung oder Gutschrift von einzelnen Internet-Inhalten, wobei Inhalte wie Zahlen, Texte oder Links auf Bilder oder Texte einem Benutzer-Rechner zunächst teilcodiert präsentiert werden, also lediglich die relevante und kostenpflichtige Nutzinformation einer Seite unlesbar codiert ist, während der restliche Seitenaufbau und die übrigen Texte unverändert sind, **dadurch gekennzeichnet, dass**
- ein zentraler Diensteanbieter-Server die uncodierten Seiten von einem Inhalteanbieter-Server entgegennimmt und anhand der innerhalb der Seite vom Inhalteanbieter-Server definierten Abwicklungsmodalitäten beliebigen Benutzer-Rechnern teilcodiert präsentiert.
- die relevanten und kostenpflichtigen Nutzinformationsteile dabei durch spezielle Zeichenketten vom Inhalteanbieter-Server für den Diensteanbieter-Server markiert werden und ein Link zum Diensteanbieter-Server auf den relevante und kostenpflichtige Nutzinformation aufweisenden Seiten eingefügt wird,
- durch Anklicken dieses Links der Benutzer-Rechner sich eine Gutschrift zubuchen lassen oder die Seite kaufen und damit eine uncodierte Seite vom Diensteanbieter-Server erhalten kann, der die codierten Informationsteile anhand von Zusatzdaten innerhalb der Seite und/oder anhand der bei ihm gespeicherten Angaben zum Inhalteanbieter-Server, Benutzer-Rechner und Seite, decodiert.

## Claims

1. Processing method for payment or crediting of individual Internet contents, whereby contents such as figures, texts or links to images or texts are initially presented to the user's computer partially encoded, i.e. that only the relevant user information subject to payment of a page is illegibly encoded, while the page remaining layout and texts remain unchanged, **characterized by** the fact that
- a central server of a service provider receives the unencoded pages from a service provider server and, in accordance with processing modalities defined by the content provider server, presents these to a user's computer partially encoded,
- in this process, the encoded parts of the information are marked by special strings of characters for the service provider server by the content provider server and a link is inserted to the pages on the service provider server containing relevant user information subject to payment,
- by clicking on this link, the user's computer is able to obtain a credit or purchase the content of the page and thus receive an unencoded page from the service provider server, which decodes the encoded parts of the information by means of the additional data within the page and/or the information stored on his own computer regarding the content provider server, user's computer and page.

## Revendications

1. Procédure d'exécution pour le paiement ou l'enregistrement d'avoirs de différents contenus Internet; les contenus tels que chiffres, textes ou liens vers des images ou des textes étant tout d'abord présentés à un ordinateur d'utilisateur partiellement codés, c'est-à-dire seules les informations utiles pertinentes et sousmis à paiement d'une page sont codées pour être illisibles alors que le reste de la page et les autres textes sont inchangés, **caractérisée en ce que**
- un serveur d'offrant de services centralisé reçoit les pages non codées d'un serveur d'offrant de contenus et à l'aide des modalités d'exécution définies dans la page par le serveur d'offrant de contenus, il les présente partiellement codées à tout ordinateur d'utilisateur,
- les parties d'information codées sont ici marquées par des chaînes de signes spéciaux par le serveur de l'offrant de contenus pour le serveur d'offrant de services et un lien vers le serveur de l'offrant de services sur les pages présentant des informations utiles soumises à paiement est inséré,
- par clic de souris sur ce lien, l'ordinateur d'utilisateur peut se faire enregistrer un avoir ou acheter la page et ainsi recevoir une page non codée du serveur d'offrant de services qui décode les parties d'information codées à l'aide des données supplémentaires dans la page et/ou à l'aide des données mémorisées chez lui sur le serveur d'offrant de contenus, l'ordinateur d'utilisateur et la page.
